# EUROPEAN PATENT APPLICATION

(11) **EP 4 768 300 A1**
(43) Date of publication of application: **01.07.2026**
(21) Application number: 25226412.2
(22) Date of filing: 22.12.2025
(51) Int. Cl.: B60L 1/00, B60L 3/04, B60L 53/14, B60H 1/00, F25D 11/00, F25D 29/00, H01R 13/713, B60R 16/03

(54) **METHOD AND SYSTEM FOR ARC-FLASH PREVENTION**

(30) Priority: 31.12.2024 US 202419006628
(71) Applicant: Thermo King LLC, Minneapolis, MN 55420 (US)
(72) Inventor: LOPEZ, Noah, Minneapolis, Minnesota, 55420 (US); ANDERSON, Carolyn, Minneapolis, Minnesota, 55420 (US); SRNEC, Matthew, Minneapolis, Minnesota, 55420 (US); STROUD, Adam, Minneapolis, Minnesota, 55420 (US)
(74) Representative: Haseltine Lake Kempner LLP

(57) **Abstract**

A method is provided for preventing an arc-flash event while an electrically powered accessory disposed on a transport unit is connected to an electrical power source. The method includes obtaining movement data indicating whether the transport unit is moving, and obtaining electrical power data indicating whether the electrically powered accessory is receiving electrical power from the electrical power source. The method also includes determining that the transport unit is moving, and determining that the electrically powered accessory is connected to the electrical power source. Also, the method includes deenergizing a connection that supplies power from the electrical power source to one or more loads of the electrically powered accessory upon detecting both that the transport unit is moving and that the electrically powered accessory is connected to the electrical power source.

## Description

### FIELD

The disclosure herein relates to an electrically powered accessory configured to be used with a transport unit. More particularly, the disclosure herein relates to an electrically powered accessory that is configured to utilize external power from a utility power source while the transport unit is parked.

### BACKGROUND

A transport unit can include, for example, a container (such as a container on a flat car, an intermodal container, etc.), a trailer, a truck, a van, a box car, a mass-transit vehicle (e.g., passenger bus), etc. The transport unit can be towed by a vehicle (e.g., a tractor) or can be part of the vehicle (e.g., a truck, a van, a mass-transit vehicle, etc.).

An electrically powered accessory can be configured to be used with the transport unit. The electrically powered accessory can be, for example, a transport climate control system attached to the transport unit, a crane attached to the transport unit, a cement mixer attached to the transport unit, one or more food appliances of a food truck, a boom arm attached to the transport unit, a concrete pumping truck, a refuse truck, a fire truck (with a power driven ladder, pumps, lights, etc.), etc. It will be appreciated that the electrically powered accessory may require continuous operation even when the vehicle's ignition is turned off and/or the vehicle is parked and/or idling and/or charging. The electrically powered accessory can require substantial power to operate and/or continuous and/or autonomous operation (e.g., controlling temperature/humidity/airflow of a climate controlled space) on an as needed basis, independent of the vehicle's operational mode.

### SUMMARY

The disclosure herein relates to an electrically powered accessory configured to be used with a transport unit. More particularly, the disclosure herein relates to an electrically powered accessory that is configured to utilize external power from a utility power source while the transport unit is parked.

The embodiments described herein are configured to prevent an arc-flash from occurring if the transport unit is driven away while a utility power source (e.g., via an electric vehicle supply equipment (EVSE), a direct grid connection, etc.) is still providing power to the electrically powered accessory.

An arc-flash can be a significant safety hazard where air is ignited due to a high power circuit being disconnected under load. A high power circuit can be, for example, a 50 V or higher circuit. In applications where the transport unit includes an electrically powered accessory, the electrically powered accessory may not have inherent control over brakes of the vehicle moving the transport unit and may not know when the vehicle is about to start moving. In tractor-trailer combinations, a tractor-trailer interface connector (e.g., a 7-way connector) may not always be connected when the trailer is being towed and it is generally uncommon for trailers to have the ability to apply braking at will. Further, braking controllers in a trailer may only be functional when they receive power from the tractor-trailer interface connector.

The embodiments described herein can detect movement of the transport unit (e.g., by using a combination of inertial measurements and/or position encoders) while an electrically powered accessory is connected to a utility power source. Upon detecting movement of the transport unit, the embodiments described herein can deenergize terminals connecting the electrically powered accessory to the utility power source to prevent an arc-flash safety hazard from occurring.

In some embodiments, the embodiments described herein can deenergize a charging plug connecting the EVSE to the electrically powered accessory. Thus, the embodiments described herein can operate independently of the transport unit's connection to a vehicle towing the transport unit or a braking system. Additionally, the electrically powered accessory can be powered by an accessory electrical power system that includes, for example, a battery pack that is not part of a drivetrain of the vehicle moving the transport unit. Thus, in some embodiments, the accessory electrical power system can be provided only to power the electrically powered accessory.

The embodiments described herein can also provide arc-flash protection for a non-EVSE system (e.g., a direct grid connection to the electrically powered accessory). It will be appreciated that arc-flash can occur during an electric standby operation when the electrically powered accessory is powered from a high voltage (e.g., shore power) electrical connection (e.g., single phase 208 VAC up to three phase 480 VAC). In some embodiments, non-EVSE connections may not be permitted to charge high voltage vehicle batteries. In these embodiments, the electrically powered accessory may not include a battery or may have the battery be disconnected from its on-board charger when the electrically powered accessory is connected to the non-EVSE connection. Also, in these embodiments, the grid side connection may be prevented from being disconnected and thus transport unit side load(s) and power source(s) may need to be isolated from the non-EVSE connection to prevent an arc-flash safety hazard from occurring.

The embodiments described herein can control connectivity of a proximity pilot pin of an EVSE system to deenergize the connection (e.g., charger plug) on the transport unit.

The embodiments described herein can trigger audible and visible alarms/notifications for the operator upon detecting movement of the transport unit while the electrically powered accessory is connected to the utility power source.

In one example, the electrically powered accessory can be a transport climate control system. In this example, a climate controlled transport unit includes the transport climate control system, a transport unit with an internal space for storing goods to be climate controlled during transport, and an accessory electrical power system configured to power an accessory (e.g., the transport climate control system). The transport climate control system can include a transport climate control unit (CCU) to condition the internal space. The accessory electrical power system is configured to receive external power from the utility power source and provide electrical power to the transport climate control system.

The embodiments described herein can provide arc-flash protection without requiring control of brakes of the transport unit. Accordingly, the embodiments described herein can provide arc-flash protection without causing a false positive situation whereby the brakes of the transport unit are triggered to actuate while the transport unit is in transit.

In one embodiment, a method is provided for preventing an arc-flash event while an electrically powered accessory disposed on a transport unit is connected to an electrical power source. The method includes obtaining movement data indicating whether the transport unit is moving, and obtaining electrical power data indicating whether the electrically powered accessory is receiving electrical power from the electrical power source. The method also includes determining that the transport unit is moving, and determining that the electrically powered accessory is connected to the electrical power source. Also, the method includes deenergizing a connection that supplies power from the electrical power source to one or more loads of the electrically powered accessory upon detecting both that the transport unit is moving and that the electrically powered accessory is connected to the electrical power source.

In another embodiment, a system is provided for preventing an arc-flash event while an electrically powered accessory disposed on a transport unit is connected to an electrical power source. The system includes the electrically powered accessory, and a controller. The controller is configured to obtain movement data indicating whether the transport unit is moving, and obtain electrical power data indicating whether the electrically powered accessory is receiving electrical power from the electrical power source. Also, the controller is configured to determine that the transport unit is moving, and determine that the electrically powered accessory is connected to the electrical power source. The controller is further configured to deenergize a connection that supplies power from the electrical power source to one or more loads of the electrically powered accessory upon detecting both that the transport unit is moving and that the electrically powered accessory is connected to the electrical power source.

### BRIEF DESCRIPTION OF THE DRAWINGS

References are made to the accompanying drawings that form a part of this disclosure, and which illustrate embodiments in which methods and systems for arc-flash prevention described in this specification can be practiced.
Fig. 1 illustrates a perspective view of a climate controlled transport unit and a tow vehicle, according to one embodiment.
Fig. 2 illustrates a side view of two climate controlled transport units parked at a docking port, according to one embodiment.
Fig. 3 illustrates a schematic diagram of an electrically powered accessory that is connected to an EVSE via a power cord, according to one embodiment.
Figs. 4A and 4B illustrate different embodiments of a first end of an optimized power cord.
Fig. 5 illustrates a receptacle of an electrically powered accessory, according to one embodiment.
Fig. 6 illustrates a flowchart of a method for arc-flash prevention, according to one embodiment.
Fig. 7A illustrates an arc-flash prevention architecture for use when an electrically powered accessory is receiving electrical power from an electrical power source, according to a first embodiment.
Fig. 7B illustrates an arc-flash prevention architecture for use when an electrically powered accessory is receiving electrical power from an electrical power source, according to a second embodiment.
Fig. 7C illustrates an arc-flash prevention architecture for use when an electrically powered accessory is receiving electrical power from an electrical power source, according to a third embodiment.
Fig. 8 illustrates a flowchart of a method for arc-flash prevention at an EVSE, according to one embodiment.
Fig. 9 illustrates an arc-flash prevention architecture for use when an electrically powered accessory is receiving electrical power from a shore power electric standby location, according to one embodiment.
Fig. 10 illustrates a flowchart of a method for arc-flash prevention at a shore power electric standby location, according to one embodiment.

Like numbers refer to similar features throughout.

### DETAILED DESCRIPTION

The disclosure herein relates to an electrically powered accessory configured to be used with a transport unit. More particularly, the disclosure herein relates to an electrically powered accessory that is configured to utilize external power from a utility power source while the transport unit is parked.

The embodiments described herein are configured to prevent an arc-flash from occurring if the transport unit is moved (e.g., due to being driven away, due to being in a collision, due to a natural disaster, etc.) while a utility power source (e.g., via an electric vehicle supply equipment (EVSE), a direct grid connection, etc.) is still providing power to the electrically powered accessory.

In some embodiments, an accessory electrical power system can supply electrical power to one or more electrical components of an electrically powered accessory. When parked, the accessory electrical power system is configured to receive external power from a utility power source. However, tow vehicles can tow away the transport unit while its accessory electrical power system is still physically connected to the external power source. This can present an arc-flash safety hazard.

The electrically powered accessory can be, for example, a transport climate control system attached to the transport unit, a crane attached to the transport unit, a cement mixer attached to the transport unit, one or more food appliances of a food truck, a boom arm attached to the transport unit, a concrete pumping truck, a refuse truck, a fire truck (with a power driven ladder, pumps, lights, etc.), etc.

It will be appreciated that a transport climate control system is generally used to control an environmental condition (e.g., temperature, humidity, air quality, and the like) within a transport unit (e.g., a container (such as a container on a flat car, an intermodal container, etc.), a trailer, a truck, a van, a box car, or other similar transport unit). Climate controlled transport units are commonly used to transport perishable items such as produce, frozen foods, and meat products. Climate controlled transport units are also used to transport passengers between locations.

The transport climate control system can include a climate control unit ("CCU") that is attached to the transport unit to control one or more environmental conditions (e.g., temperature, humidity, atmosphere, etc.) of a particular space (e.g., a cargo space, a passenger space, etc.) (generally referred to as an "internal climate controlled space" or the like). The can CCU include multiple components (e.g., a compressor, one or more fans or blowers, a controller, solenoid valve(s), etc.) that require power in order to operate.

For example, the embodiments described herein can be directed to a climate controlled transport unit that includes a transport unit with an internal space for storing cargo, a transport climate control system for providing climate control of the internal space, and an accessory electrical power system for powering the transport climate control system. The climate controlled transport unit is moved between locations by a tow vehicle attached to the climate controlled transport unit. The accessory electrical power system supplies electrical power to electrical components of the transport climate control system. When parked, the accessory electrical power system is configured to receive external power from a utility power source via a power cord. However, tow vehicles are able to tow away a climate controlled transport unit while its accessory electrical power system is still physically connected to the external power source. This can present an arc-flash safety hazard where air can be ignited due to the power cord being disconnected while the accessory electrical power system is receiving electrical power from the utility power source.

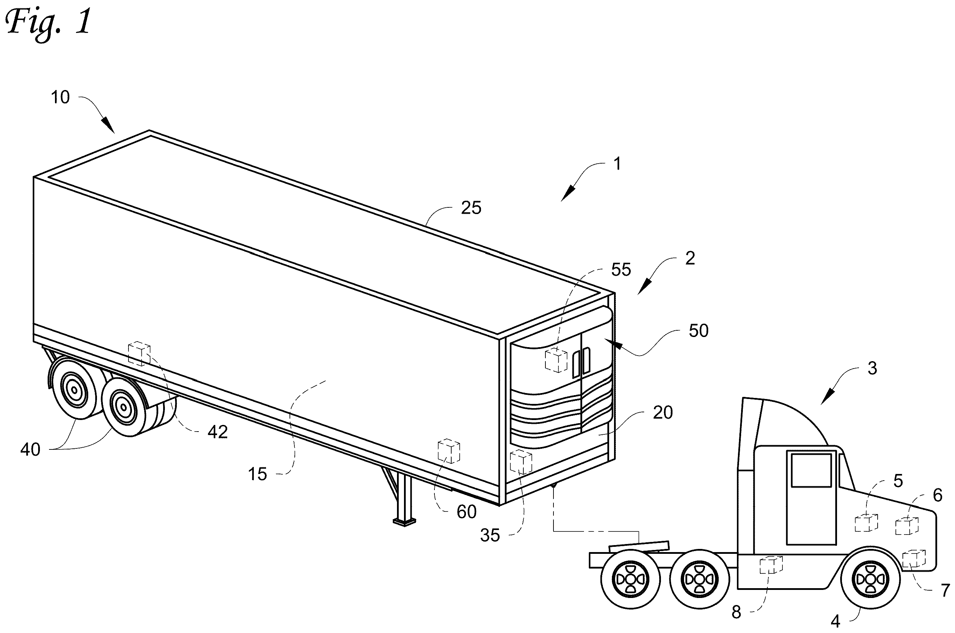

Fig. 1 is a perspective view of a climate controlled transport unit 1 and a tow vehicle 3. The climate controlled transport unit 1 includes a transport climate control system (TCCS) 2 and a transport unit 10. The TCCS 2 includes a climate control unit (CCU) 50. The transport unit 10 includes an internal space 15 for storing cargo and wheels 40 for moving the transport unit 10 along the ground. The transport unit 10 includes a braking system 42 for the wheels 40. When activated, the braking system 42 is configured to prevent the wheels 40 from rotating and prevent movement of the transport unit 10. It will be appreciated that in some embodiments, the transport unit 10 may be a container that sits on a chassis with the braking system 42 and the wheels 40 being part of the chassis.

The CCU 50 is configured to provide climate control (e.g., temperature control, humidity control, air quality control, etc.) within the internal space 15 of the transport unit 15. For example, the CCU 50 may keep the internal space 15 of the transport unit 15 at or within a desired temperature and/or humidity level to prevent the cargo within the internal space 15 from being damaged or spoiled. The CCU 50 is attached to the front 20 of the transport unit 10 in Fig. 1. However, in other embodiments, the CCU 50 may be attached to a roof 25 or a different side of the transport unit 10.

The TCCS 2 includes a programmable controller 55 and a battery pack 35. The controller 55 may be a single integrated control unit or a control unit formed by a distributed network of control elements 55, 60. In an embodiment, the controller 55 may be disposed in and/or configured to operate the CCU 50 and its components. The battery pack 35 is configured to store electrical power and supply the electrical power to one or more components of the climate controlled transport unit 1. For example, the battery pack 35 may provide the electrical power for operating the CCU 50 and/or the controller 55. The battery pack 35 is disposed in the transport unit 10 in Fig. 1. However, the battery pack 35 may be disposed outside of the transport unit 10 and/or within the CCU 50 in other embodiments.

As shown in Fig. 1, the transport unit 10 is configured to be attached and moved by the tow vehicle 3. The tow vehicle 3 is attached to the transport unit 10 of the climate controlled transport unit 1 and tows climate controlled transport unit 1 while in transit. The tow vehicle 3 includes wheels 4, a programmable controller 5, a prime mover 6, and a braking system 7. The controller 5 may be a single integrated unit or a network of control elements as similarly discussed regarding the controller 55 of the TCCS 2. The controller 5 is configured to control operation of the tow vehicle 3 including the prime mover 6 and the braking system 7. In an embodiment, the prime mover 6 can be a diesel engine. The braking system 7 is configured to stop and/or prevent rotation of the wheels 4. The tow vehicle 3 may optionally include a battery pack 8. For example, the tow vehicle 3 in an embodiment may be an electric vehicle or hybrid vehicle and the prime mover 6 may be or include an electric motor powered by the battery pack 8.

The tow vehicle 5 in Fig. 1 is a road tractor. However, it should be appreciated that the tow vehicle 5 may be a different type of vehicle configured for towing the climate controlled transport unit 1. For example, the tow vehicle 5 in an embodiment may be yard tractor, drone, or other type of vehicle configured to tow the climate controlled transport unit 1 between different locations.

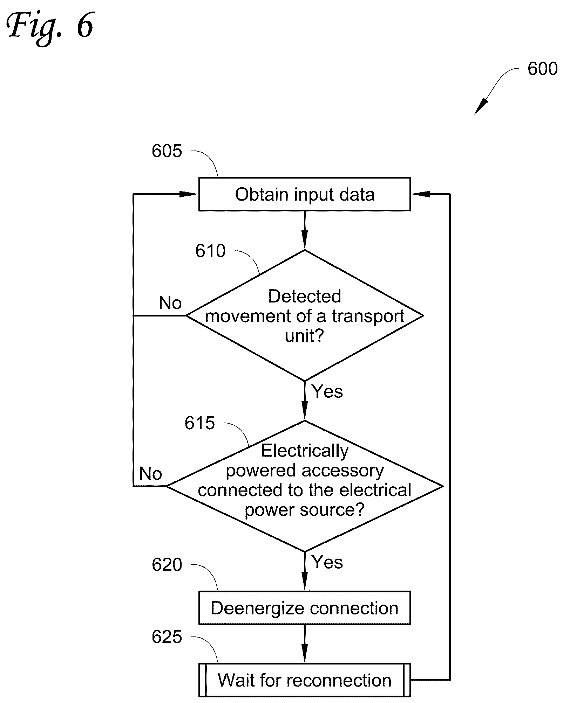

Systems and methods for arc-flash prevention when the TCCS 2 is connected to an electrical power source are discussed below with respect to Figs. 6-10.

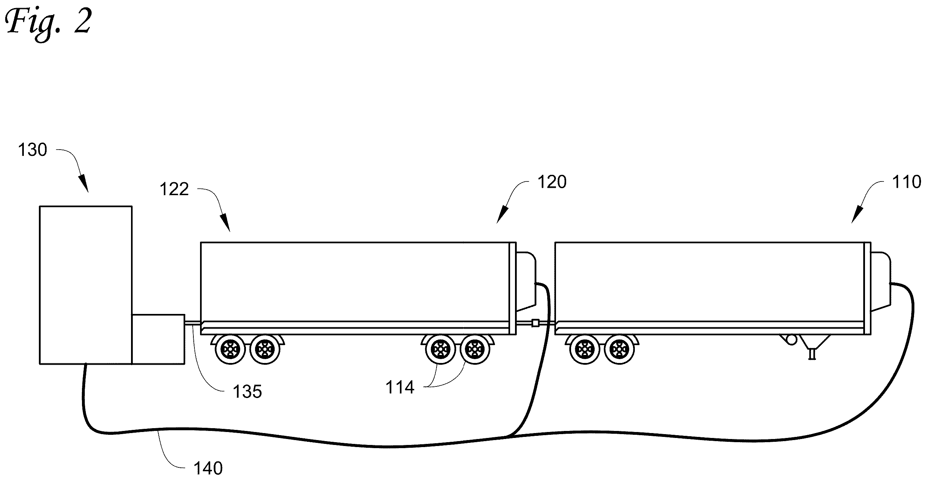

Fig. 2 is a side prospective view of a front climate controlled transport unit 110, a rear climate controlled transport unit 120, and a docking port 130. Each climate controlled transport unit 110, 120 shown in Fig. 2 has a similar configuration as the climate controlled transport unit 1 discussed above, except that the transport unit 122 of the rear climate controlled transport unit 120 includes a front pair of wheels 114 as the rear climate controlled transport unit 120 is directly attached the front climate controlled transport unit 110 instead of a tow vehicle (e.g., the tow vehicle 5 in Fig. 1). The front pair of wheels 114 is directly attached on the transport unit 122 in Fig. 2. However, in other embodiments, the front pair of wheels 114 may be part of a dolly (not shown) that is attached to transport unit 122. In an embodiment, the dolly may provide the front pair of wheels 114 and can be used for attaching the rear climate controlled transport unit 120 to the front climate controlled transport unit 110.

The transport unit 122 is parked at a docking port 130. For example, the docking port 130 may be a facility (e.g., a warehouse, building, yard, etc.) for offloading cargo from transport units and/or for parking transport units. In an embodiment, the docking port 130 may include an electrical power source for providing electrical power to electrically powered accessories (e.g., TCCSs) of the climate controlled transport units 110, 120. In some embodiments, the electrical power source can be a charging station (e.g., EVSE) for charging parked climate controlled transport units. In some embodiments, the electrical power source can be a shore power source or utility power source that provides utility power to the electrically powered accessory while the climate controlled transport units 110, 120 are docked at the docking port 130. The docking port 130 includes an attachment arm 135 and a power cord 140. The attachment arm 135 is configured to attach a transport unit 122 to the docking port 130 when engaged. The power cord 140 is configured to supply electrical power from the docking port 130 to the climate controlled transport units 110, 120.

Systems and methods for arc-flash prevention when electrically powered accessories of the climate controlled transport units 110, 120 are connected to the docking port 130 are discussed below with respect to Figs. 6-10.

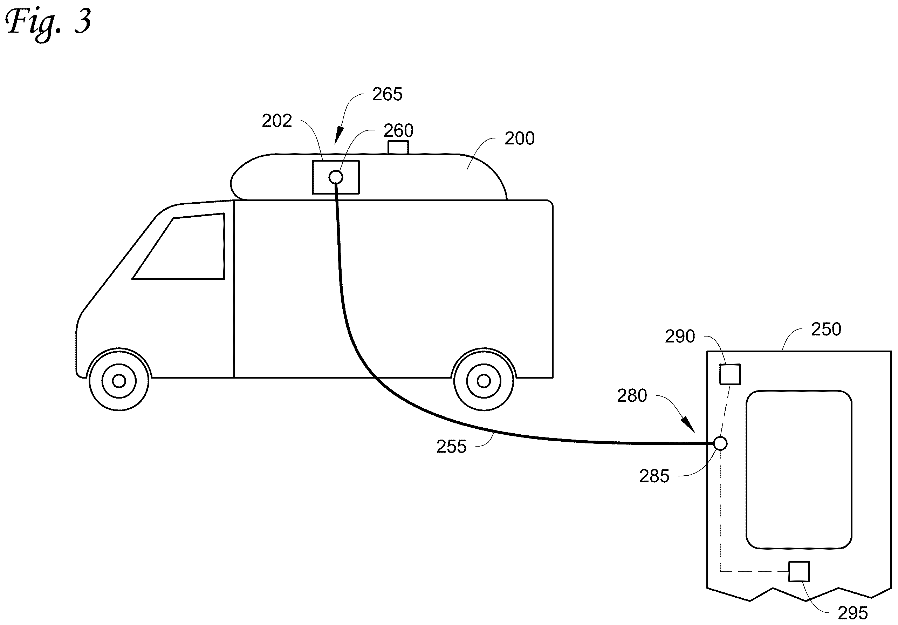

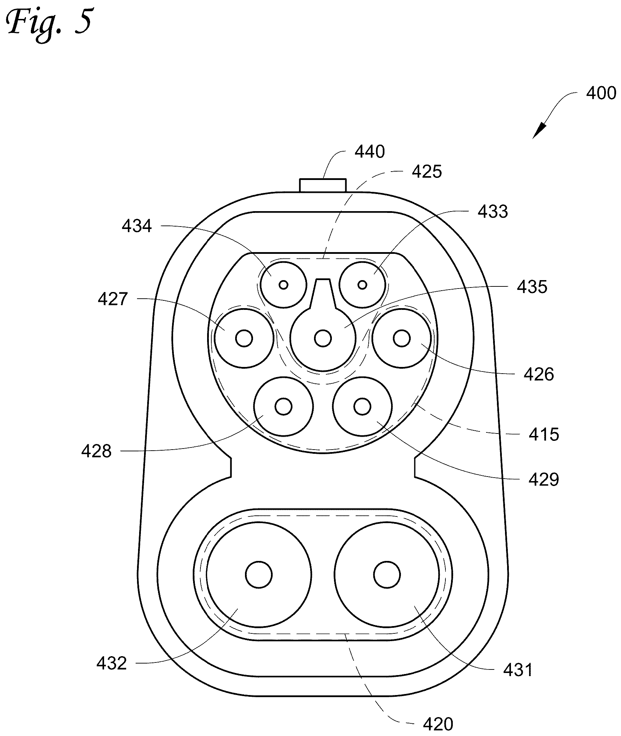

Fig. 3 illustrates a schematic diagram of an electrically powered accessory 200 that is connected to an electrical supply equipment (EVSE) (e.g., electric vehicle charging station) 250 via a power cord 255, according to one embodiment. The EVSE 250 can supply one or more of AC power sources and DC power sources to the electrically powered accessory 200 via the power cord 255. The electrically powered accessory 200 shown in Fig. 3 is a TCCS that includes a CCU. The electrically powered accessory 200 includes a receptacle 202 for receiving the power cord 255. One embodiment of the receptacle 200 is discussed below with respect to Fig. 5.

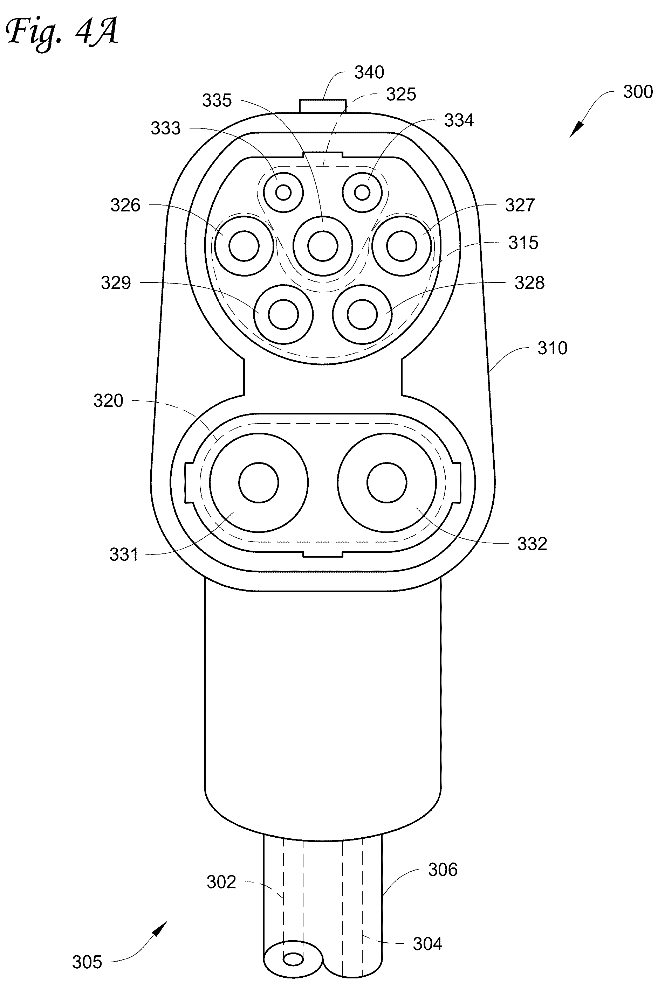

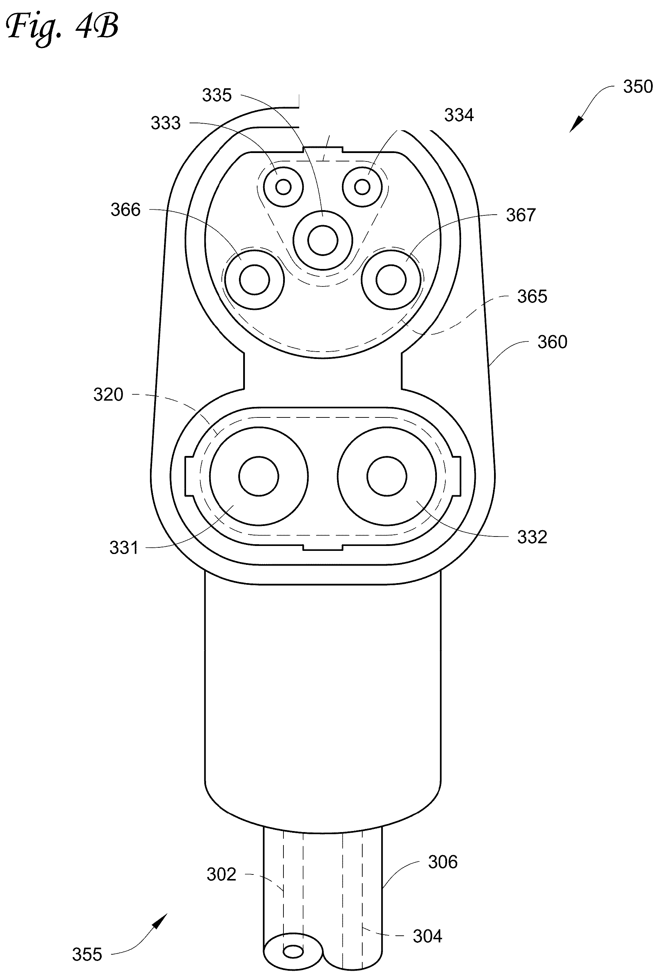

The power cord 255 includes a first end 265 and a second end 280. The first end 265 of the power cord 255 includes a single plug 260 that is connected to the receptacle 202 of the electrically powered accessory 200. The second end 280 of the power cord 255 also includes a single plug 285 that is connected to the EVSE 250. The EVSE 250 can internally include an AC power source 290 and a DC power source 295. In some embodiments, the power cord 255 can provide AC power and DC power from the EVSE 250 to the electrically powered accessory 200 via the single plug 260 at the first end 265 of the power cord 255 and the single plug 285 at the second end 280 of the power cord 255. Details of the first end 265 of the power cord 255 are described below with respect to Figs. 4A and 4B.

It will be appreciated that the power cords 255 can connect to the AC power source 290, the DC power source 295, and the EVSE 250 using one or a combination of a Mode 1 charging mode, a Mode 2 charging mode, a Mode 3 charging mode, and a Mode 4 charging mode.

In the Mode 1 charging mode from IEC 61851, the AC power source 290 can include a normal AC receptacle accepting, for example, a NEMA 16-20P plug, and provides no communication with the electrically powered accessory 200.

EVSE 250 can include a normal AC receptacle accepting, for example, a NEMA 16-20P plug, and provides no communication with the electrically powered accessory 200.

In the Mode 2 charging mode, the AC power source 290 and/or the EVSE 250 can include a normal AC receptacle accepting, for example, NEMA 15-50P, and the power cord 255 can include communication with the electrically powered accessory.

In the Mode 3 charging mode, the AC power source 290 and/or the EVSE 250 can be an AC pedestal or wall mount EVSE with the second end 280 permanently affixed to the AC power source 290 and/or the EVSE 250.

In the Mode 4 charging mode from IEC 61851, the AC power source 290, the DC power source 295 and/or the EVSE 250 can provide DC charging with the second end 280 permanently affixed to the DC power source 295 and/or an AC/DC converter (not shown) configured to convert AC power from the AC power source 290 into DC power, and/or the EVSE 250.

It will also be appreciated that the power cord 255 can concurrently connect a vehicle electrical system of the vehicle and/or the electrically powered accessory 200 to either of the AC power source 290 and the DC power source 295 or to the EVSE 250. Accordingly, a rechargeable energy storage device of the electrically powered accessory 200 can be connected to the DC power source 295 or a vehicle electrical system of the vehicle can be connected to the AC power source 290 via the same power cord 255. Also, a rechargeable energy storage device of the electrically powered accessory 200 can be simultaneously connected to the DC power source 295 and a vehicle electrical system of the vehicle can be connected to the DC power source 295 via the same power cord 255.

Systems and methods for arc-flash prevention when the electrically powered accessory 200 is connected to the EVSE 250 are discussed below with respect to Figs. 6-10.

Fig. 4A illustrates a first end 305 of a power cord 300 (e.g., the first end 265 of the power cord 255 shown in Fig. 3), according to a first embodiment. The power cord 300 includes one or more wire portions 302, 304, and a single plug 310 at the first end 305. In some embodiments, the wire portion 302, 304 can be configured to transfer three-phase or single-phase AC power through the power cord 300. In some embodiments, the wire portion 302, 304 can be configured to transfer DC power through the power cord 300. The wire portion 302, 304 are provided within a single cable sheath 306 through the first end 305 of the power cable 300 up to the single plug 310. The single plug 310 is connected to a first end of the wire portion 302, 304. The single plug 310 includes an AC contact arrangement 315, a DC contact arrangement 320, and a communication contact arrangement 325. The first end 305 of the power cord 300 is configured to connect to an electrically powered accessory (e.g., the CCU 50 shown in Fig. 1, a TCCS provided with the climate controlled transport units 110, 120 shown in Fig. 2, the electrically powered accessory 200 shown in Fig. 3, etc.) configured to be attached to a transport unit.

The AC contact arrangement 315 can be configured to transfer three-phase AC power or single-phase AC power out of the power cord 300. The AC contact arrangement 315 includes a neutral contact 326 and line phase contacts 327, 328, 329, with each of the contacts 327, 328, 329 supplying a separate line phase of a three-phase AC power. In one example, when the AC contact arrangement 315 is supplying single-phase AC power, only the neutral contact 326 and one of the line phase contacts 327, 328, 329 (e.g., line phase contact 327) may be used.

The DC contact arrangement 320 can be configured to transfer DC power out of the power cord 300. The DC contact arrangement 320 includes a positive DC contact 331 and a negative DC contact 332.

The communication contact arrangement 325 can be configured to communicate with the electrically powered accessory. The communication contact arrangement 325 includes a control pilot contact 333 that provides post-insertion signaling, a proximity pilot contact 334 that provides post-insertion signaling, and a protective earth contact 335 that can provide a full-current protective earthing system. The protective earth contact 335 is a safety feature that can reduce electric shock potential when, for example, there is a faulty connection.

Fig. 4B illustrates a first end 355 of a power cord 350, according to a second embodiment. The power cord 350 includes one or more wire portions 302, 304, and a single plug 360 at the first end 355. In some embodiments, the wire portion 302, 304 can transfer single-phase AC power through the power cord 350. In some embodiments, the wire portion 302, 304 can transfer DC power through the power cord 350. The wire portion 302, 304 is provided within a single cable sheath 306 through the first end 355 of the power cable 350 up to the single plug 360. The single plug 360 is connected to a first end of the wire portion 302, 304. The single plug 360 includes a single-phase AC contact arrangement 365, a DC contact arrangement 320, and a communication contact arrangement 325. The first end 355 of the power cord 350 is configured to connect to an electrically powered accessory (e.g., the CCU 50 shown in Fig. 1, a TCCS provided with the climate controlled transport units 110, 120 shown in Fig. 2, the electrically powered accessory 200 shown in Fig. 3, etc.) configured to be attached to a transport unit.

The single-phase AC contact arrangement 365 can be configured to transfer single-phase AC power out of the power cord 350. The single-phase AC contact arrangement 365 includes a neutral contact 366 and a line contact 367 supplying a line phase of a single-phase AC power. For example, with a level 1 J1772 contact arrangement, the single phase power can be L1-N and with a level 2 J1772 contact arrangement, the single phase power can be L1-L2.

The DC contact arrangement 320 can be configured to transfer DC power out of the power cord 350. The DC contact arrangement 320 includes a positive DC contact 331 and a negative DC contact 332.

The communication contact arrangement 325 can be configured to communicate with the electrically powered accessory. The communication contact arrangement 325 includes a control pilot contact 333 that provides post-insertion signaling, a proximity pilot contact 334 that provides post-insertion signaling, and a protective earth contact 335 that can provide a full-current protective earthing system.

It will be appreciated that while the power cord 300 is shown using a Type 2 combo configuration reflecting VDE-AR-E 2623-2-2 plug specifications and power cord 350 is shown using a Type 1 combo configuration reflecting SAE J1772/2009 automotive plug specifications, it will be appreciated that in other embodiments the power cords 300, 350 can use a Type 3 combo configuration reflecting EV Plug Alliance specifications and/or a fast charge coupler configuration reflecting, for example, CHAdeMO specifications.

The power cords 300, 350 also include an unlock tab 340 that is configured to allow a user to detach the power cord 300, 350 from a receptacle.

Fig. 5 illustrates one embodiment of a receptacle 400 of an electrically powered accessory (e.g., the CCU 50 shown in Fig. 1, a TCCS provided with the climate controlled transport units 110, 120 shown in Fig. 2, the electrically powered accessory 200 shown in Fig. 3, etc.) configured to be attached to a transport unit.

In some embodiments, the receptacle 400 can be part of a power distribution unit (not shown) of an electrically powered accessory (e.g., the electrically powered accessory 200 shown in Fig. 2) that can distribute AC power and DC power to various components of the electrically powered accessory including, for example, a rechargeable energy storage device (not shown).

The receptacle 400 is configured to receive a single plug (e.g., the single plug 310, 360 shown in Figs. 4A and 4B) of a power cord (e.g., the power cords 300, 350 shown in Figs. 4A and 4B). The receptacle 400 includes an AC contact arrangement 415, a DC contact arrangement 420, and a communication contact arrangement 425.

The AC contact arrangement 415 can be configured to receive three-phase AC power or single-phase AC power from a power cord (e.g., the power cords 300, 350 shown in Figs. 4A and 4B). The AC contact arrangement 415 includes a neutral contact 426 and line phase contacts 427, 428, 429, with each of the contacts 427, 428, 429 receiving a separate line phase of a three-phase AC power. When the AC contact arrangement 415 is receiving single-phase AC power, only the neutral contact 426 and one of the line phase contacts 427, 428, 429 (e.g., the line phase contact 427) may be used. Also, in some embodiments, when the AC contact arrangement 415 is receiving single-phase AC power, the receptacle 400 can be adapted to not include the line phase contacts 427, 428, 429 not being used (e.g., the line phase contacts 428, 429). The neutral contact 426 is configured to connect with a neutral contact (e.g., the neutral contact 326, 366 shown in Figs. 4A and 4B) of a power cord. Each of the line phase contacts 427, 428, 429 is configured to connect with a line phase contact 327, 328, 329 of an power cord.

The DC contact arrangement 420 can be configured to receive DC power from a power cord. The DC contact arrangement 420 includes a positive DC contact 431 and a negative DC contact 432. The positive DC contact 431 is configured to connect with a positive DC contact (e.g., the positive DC contact 331 shown in Figs. 4A and 4B) of a power cord. The negative DC contact 432 is configured to connect with a negative DC contact (e.g., the negative DC negative contact 332 shown in Figs. 4A and 4B) of a power cord.

The communication contact arrangement 425 can be configured to communicate with the electrically powered accessory. The communication contact arrangement 425 includes a control pilot contact 433 that provides post-insertion signaling, a proximity pilot contact 434 that provides post-insertion signaling, and a protective earth contact 435 that can provide a full-current protective earthing system. The control pilot contact 433 is configured to connect with a control pilot contact (e.g., the control pilot contact 433 shown in Figs. 4A and 4B) of a power cord. The proximity pilot contact 434 is configured to connect with a proximity pilot contact (e.g., the proximity pilot contact 434 shown in Figs. 4A and 4B) of a power cord. The protective earth contact 435 is configured to connect with a protective earth contact (e.g., the protective earth contact 435 shown in Figs. 4A and 4B) of a power cord.

The configuration of the receptacle 400 allows the electrically powered accessory to receive AC power from an AC power source and/or DC power from a DC source from a single plug of a power cord. In some embodiments, the receptacle 400 can allow the electrically powered accessory to receive AC power from an AC power source and DC power from a DC source from a single plug of a power cord.

It will be appreciated that while the receptacle 400 is shown to accept a Type 2 combo plug configuration reflecting VDE-AR-E 2623-2-2 plug specifications, it will be appreciated that in other embodiments the receptacle 400 can be modified to accept a Type 3 combo plug configuration reflecting EV Plug Alliance specifications and/or a fast charge coupler plug configuration reflecting, for example, CHAdeMO specifications. Also, in some embodiments, the receptacle 400 can be modified to accept a Type 1 combo configuration reflecting SAE J1772/2009 automotive plug specifications.

The receptacle 400 also includes a latch mechanism 440 that is configured to lock the single plug when connected to the receptacle 400. In some embodiments, the latch mechanism 440 is a motorized device that physically obstructs an unlock tab (e.g., the unlock tab 340 shown in Figs. 4A and 4B) of the single plug when the single plug is connected to the receptacle 400 as a safety feature to prevent a user from removing the single plug from the receptacle 400 until it is safe to do so.

It will be appreciated that in other embodiments, the plug of the power cords 300, 350 can use different contact arrangements provided that they comply with rules of local jurisdictions and harmonized standards, e.g. IEC 61851.

Fig. 6 illustrates a flowchart of a method 600 for arc-flash prevention, according to one embodiment. The method 600 can be used with any of the embodiments discussed above with respect to Figs. 1-3. The method 600 begins at 605, whereby a controller (e.g., a controller of an electrically powered accessory) obtains input data. The input data includes movement data regarding movement of a transport unit where the electrically powered accessory is disposed, and electrical power data regarding whether the electrically powered accessory is receiving electrical power from an electrical power source.

In some embodiments, the electrically powered accessory and/or the transport unit can include one or more sensors that detect movement of the transport unit. In some embodiments, the one or more sensors can include a gyroscope and/or accelerometer to detect movement data of the transport unit. The one or more sensors can communicate with the controller. In some embodiments, the one or more sensors can communicate with the controller via a network protocol (e.g., a control area bus (CAN) network bus, a RS485 connection, a Bluetooth connection, a Zigbee connection, etc.) and/or a discrete logic output when the one or more sensors have pre-programmed trigger thresholds.

In some embodiments, the electrically powered accessory and/or the transport unit can include one or more sensors that detect whether the electrically powered accessory is receiving electrical power from an electrical power source. For example, in some embodiments, the electrically powered accessory can include voltage and/or current sensors configured to monitor voltage and/or current levels received by the electrically powered accessory from the electrical power source. In some embodiments, the controller can receive electrical power data from the voltage and/or current sensors as digital or analog output pulses from the voltage and/or current sensors.

The method then proceeds to 610.

At 610, the controller uses the movement data to determine whether the transport unit is moving. In some embodiments, the controller can compare the movement data to a predefined length threshold (e.g., 12 inches in a forward or rearward direction) to determine whether the transport unit is moving. When the controller determines that the transport unit is moving (e.g., the movement data indicates that the transport unit has traveled farther than the predefined length threshold), the method proceeds to 615. When the controller determines that the transport unit is not moving (e.g., the movement data indicates that the transport unit has not traveled farther than the predefined length threshold), the method proceeds back to 605.

At 615, the controller uses the electrical power data to determine whether the electrically powered accessory is receiving electrical power from the electrical power source. In some embodiments, the controller can compare the electrical power data to a predefined electrical threshold to determine whether the electrically powered accessory is receiving electrical power from the electrical power source. In some embodiments, the predefined electrical threshold can be, for example, an AC voltage level (e.g., 50 VAC), a DC voltage level (e.g., 50 VDC), an AC current level, a DC current level, etc. When the controller determines that the electrically powered accessory is receiving electrical power from the electrical power source (e.g., the electrical power data indicates that the voltage and/or current is greater than the predefined electrical threshold), the method proceeds to 620. When the controller determines that the electrically powered accessory is not receiving electrical power from the electrical power source (e.g., the electrical power data indicates that the voltage and/or current is not greater than the predefined electrical threshold), the method proceeds back to 605.

At 620, the controller sends an instruction to deenergize a connection that supplies power from the electrical power source to one or more loads of the electrically powered accessory. In some embodiments, when the electrical power source is an EVSE, the controller can use a signal-level relay to open a proximity pilot connection with a power cord that connects the electrically powered accessory to the electrical power source. In some embodiments, when the electrical power source is a shore power source, the controller can open one or more AC power contactors and/or power relays that are disposed downstream of a shore power inlet of the electrically powered accessory. Accordingly, the method 600 can prevent an arc-flash event that can create a safety hazard where the electrically powered accessory was connected to the electrical power source. The method 600 then proceeds to 625.

At 625, the controller waits for the electrically powered accessory to be reconnected to the electrical power source. In some embodiments, this can include waiting for the electrically powered accessory to be re-plugged to the electrical power source to reinitiate electrical power transfer from the electrical power source to the electrically powered accessory. The method 600 then proceeds back to 605.

Specific examples of architectures and methods for arc-flash prevention clarifying the method 600 are described in more detail below.

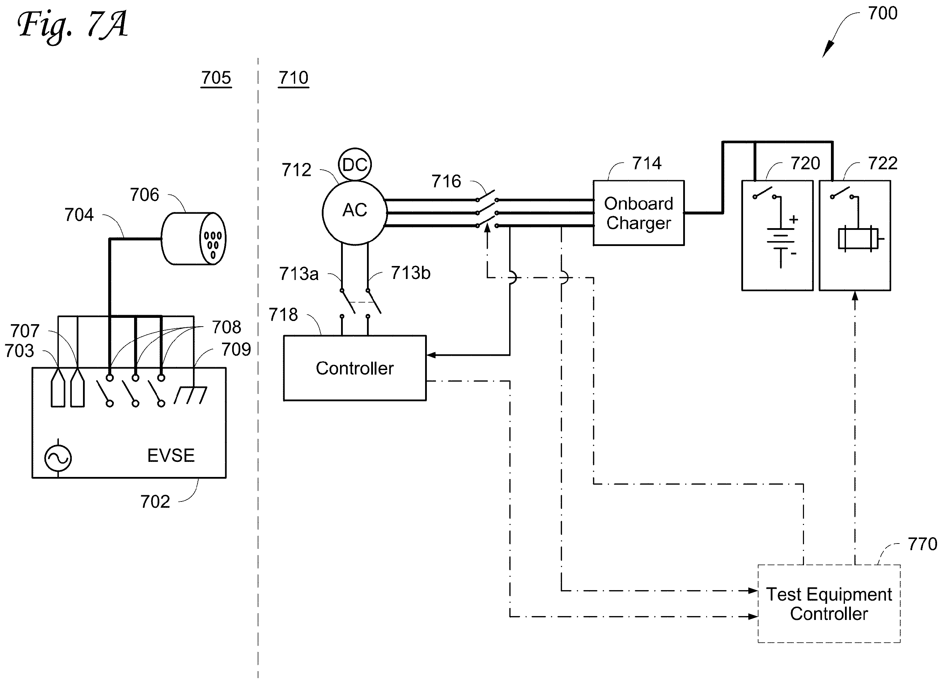

Fig. 7A illustrates an arc-flash prevention architecture 700 for use when an electrically powered accessory 710 is receiving electrical power from an electrical power source 705, according to a first embodiment.

The electrical power source 705 includes an EVSE 702 and a power cord 704 with a charging plug 706. In this embodiment, the EVSE 702 is an AC charging EVSE configured to supply AC power (e.g., three phase AC power or single phase AC power) to the electrically powered accessory 710. The EVSE 702 includes a proximity pilot terminal 703, a control pilot terminal 707, three AC phase line terminals 708, and a protective earth terminal 709. The pilot terminal 703 and contact terminal 707 are configured to send and receive signals through the power cord 704 to the electrically powered accessory 710. The three AC phase line terminals 708 with the protective earth terminal 709 are configured to supply three phase AC power to the electrically powered accessory 710 via the power cord 704. In some embodiments, the EVSE 702 can be configured to supply single phase AC power to the electrically powered accessory 710 using one of the three AC phase line terminals 708 in combination with the protective earth terminal 709.

The power cord 704 and the charging plug 706 are configured to transfer AC power (e.g., three phase AC power, single phase AC power) received from one or more of the AC phase line terminals 708 to the electrically powered accessory 710. Also, the power cord 704 and the charging plug 706 are configured to transfer communication signals received from the proximity pilot terminal 703 and the control pilot terminal 707 to the electrically powered accessory 710. The power cord 704 and the charging plug 706 can be, for example, one of the power cords 300, 350 and the charging plugs 310, 360 shown in Figs. 4A and 4B.

The electrically powered accessory 710 includes a charging inlet receptacle 712 configured to receive and connect to the charging plug 736. The charging inlet receptacle 712 is connected to an onboard charger 714 via an AC inlet contactor 716. The charging inlet receptacle 712 is also connected to a controller 718. This allows the charging inlet receptacle 712 to transfer AC power received from the charging plug 706 to the onboard charger 714 via the AC inlet contactor 716. This also allows the charging inlet receptacle 712 to transfer communication signals between the electrical power source 705 (via the charging plug 706) and the controller 718 via a proximity pilot communication contact 713a and a control pilot communication contact 713b. The charging inlet receptacle 712 can be, for example, the receptacle 400 shown in Fig. 5. The electrically powered accessory can also include an optional test equipment controller 770.

The controller 718 is configured to provide communication signals to the charging inlet receptacle 712 via a proximity pilot contact 713a and a control pilot contact 713b. The charging inlet receptacle 712 is configured to receive and attach to the charging plug 706 to connect the EVSE 702 to the electrically powered accessory 710 and namely the onboard charger 714.

The onboard charger 714 can include an AC to DC converter that is configured to convert AC power received via the charging inlet receptacle 712 into DC power that can be used to charge a battery pack 720 and/or power one or more electric loads 722 of the electrically powered accessory 710.

The controller 718 is configured to control charging and powering of the electrically powered accessory 710. In some embodiments, the controller 718 is configured to communicate with one or more sensors configured to detect movement of the transport unit and/or one or more sensors configured to monitor voltage and/or current levels received from the EVSE 702 via the power cord 704. In some embodiments, the controller 718 can open and close the proximity pilot contact 713a and/or the control pilot contact 713b. In some embodiments, the controller 718 can also open and close the AC inlet contactor 716, for example, if the controller 718 determines that the electrically powered accessory 710 is malfunctioning.

The optional test equipment controller 770 is configured to test and ensure that the electrically powered accessory is operating correctly. The optional test equipment controller 770 can receive information from the controller 718 and the AC inlet contactor 716. The optional test equipment controller 770 can also be configured to control operation of the AC inlet contactor 716 and/or the one or more electric loads 722. In some embodiments, the optional test equipment controller 770 can also be configured to communicate with the one or more sensors configured to detect movement of the transport unit and/or the one or more sensors configured to monitor voltage and/or current levels received from the EVSE 702 via the power cord 704. In some embodiments, the optional test equipment controller 770 is configured to communicate with the controller 718, the AC inlet contactor 716, and/or the one or more electric loads 722 via a network protocol (e.g., a control area bus (CAN) network bus, a RS485 connection, a Bluetooth connection, a Zigbee connection, etc.). While the optional test equipment controller 770 is shown separately from the controller 718, in some embodiments the optional test equipment controller 770 can be part of, combined with or included within the controller 718.

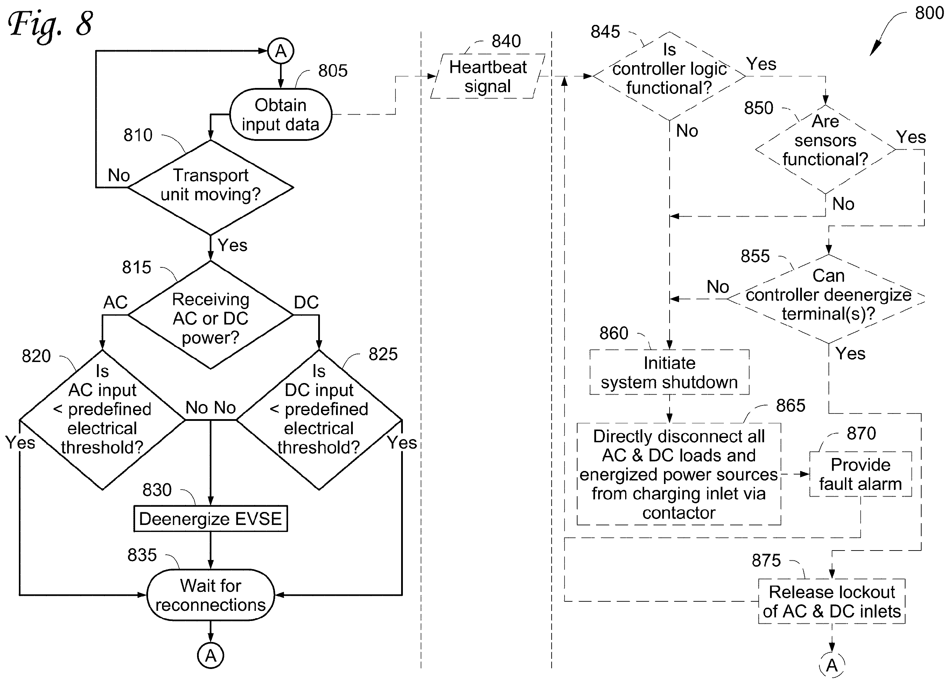

Operation of the controller 718 and the optional test equipment controller 770 based on the method 600 is discussed below with respect to Fig. 8.

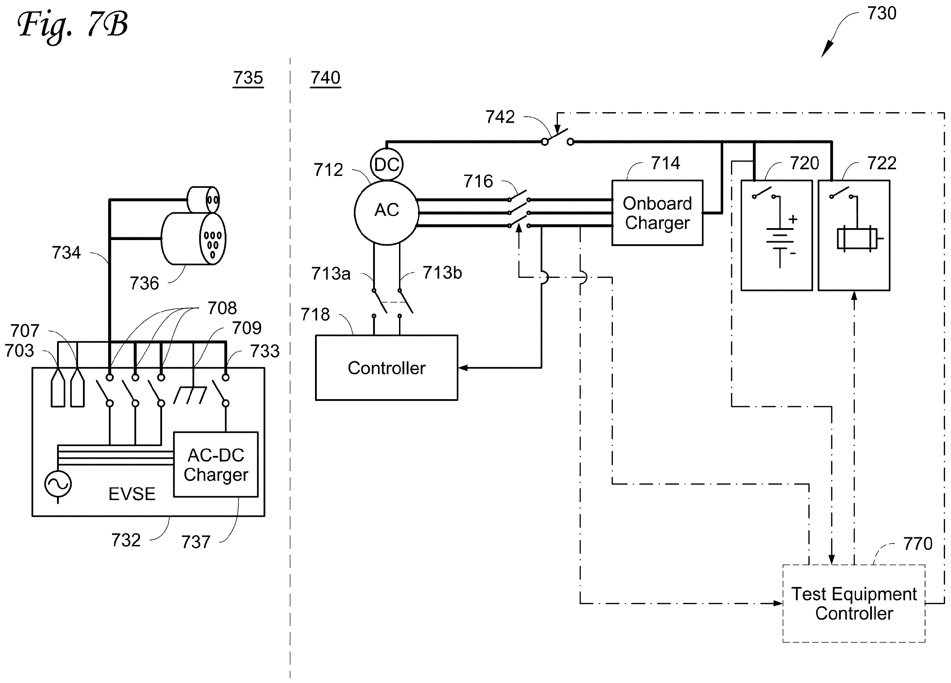

Fig. 7B illustrates an arc-flash prevention architecture 730 for use when an electrically powered accessory 740 is receiving electrical power from an electrical power source 735, according to a second embodiment.

The electrical power source 735 includes an EVSE 732 and a power cord 734 with a charging plug 736. In this embodiment, the EVSE 732 is an AC and DC charging EVSE configured to supply AC power (e.g., three phase AC power or single phase AC power) and/or DC power to the electrically powered accessory 740. The EVSE 732 includes a proximity pilot terminal 703, a control pilot terminal 707, three AC phase line terminals 708, a protective earth terminal 709, a DC power connection 733, and an AC-DC charger 737. The proximity pilot terminal 703 and control pilot terminal 707 are configured to send and receive signals through the power cord 734 to the electrically powered accessory 740. The three AC phase line terminals 708 with the protective earth terminal 709 are configured to supply three phase AC power to the electrically powered accessory 740 via the power cord 704. In some embodiments, the EVSE 732 can be configured to supply single phase AC power to the electrically powered accessory 740 using one of the three AC phase line terminals 708 in combination with the protective earth terminal 709. The DC power connection 733 minimally includes a positive and a negative terminal, and is configured to supply DC power to the electrically powered accessory 740. The AC-DC charger 737 is configured to convert AC power into DC power to be sent to the electrically powered accessory 740 via the DC power connection 733.

The power cord 734 and the charging plug 736 are configured to transfer AC power (e.g., three phase AC power, single phase AC power) received from one or more of the AC phase line terminals 708 to the electrically powered accessory 740. The power cord 734 and the charging plug 736 are also configured to transfer DC power received from the DC power connection 733 to the electrically powered accessory 740. Also, the power cord 734 and the charging plug 736 are configured to transfer communication signals received from the proximity pilot terminal 703 and the control pilot terminal 707 to the electrically powered accessory 740. The power cord 734 and the charging plug 736 can be, for example, one of the power cords 300, 350 and the charging plugs 310, 360 shown in Figs. 4A and 4B.

The electrically powered accessory 740 includes a charging inlet receptacle 712 configured to receive and connect to the charging plug 736. The charging inlet receptacle 712 is connected to an onboard charger 714 via an AC inlet contactor 716. Also, the charging inlet receptacle 712 is connected to a battery pack 720 and one or more electric loads 722 of the electrically powered accessory 740 via a DC inlet contactor 742, although only in the absence of AC power at the inlet connector 712. The charging inlet receptacle 712 is also connected to a controller 718. This allows the charging inlet receptacle 712 to transfer AC power received from the charging plug 736 to the onboard charger 714 via the AC inlet contactor 716. Also, this allows the charging inlet receptacle 712 to transfer DC power received from the charging plug 736 to the battery pack 720 and/or one or more electric loads 722, although only in the absence of AC power at the inlet connector 712. This also allows the charging inlet receptacle 712 to transfer communication signals between the electrical power source 735 (via the charging plug 736) and the controller 718 via a proximity pilot communication contact 713a and a control pilot communication contact 713b. The charging inlet receptacle 712 can be, for example, the receptacle 400 shown in Fig. 5.

The onboard charger 714 can include an AC to DC converter that is configured to convert AC power received via the charging inlet receptacle 712 into DC power that can be used to charge a battery pack 720 and/or power one or more electric loads 722 of the electrically powered accessory 740.

The controller 718 is configured to control charging and powering of the electrically powered accessory 740. In some embodiments, the controller 718 is configured to communicate with one or more sensors configured to detect movement of the transport unit and/or one or more sensors configured to monitor voltage and/or current levels received from the EVSE 732 via the power cord 734. In some embodiments, the controller 718 can open and close the proximity pilot contact 713a and/or the control pilot contact 713b. In some embodiments, the controller 718 can also open and close the AC inlet contactor 716, for example, if the controller 718 determines that the electrically powered accessory 740 is malfunctioning. In some embodiments, the controller 718 can also open and close the DC inlet contactor 742, for example, if the controller 718 determines that the electrically powered accessory 740 is malfunctioning.

The optional test equipment controller 770 is configured to test and ensure that the electrically powered accessory is operating correctly. The optional test equipment controller 770 can receive information from the controller 718, the AC inlet contactor 716, and the DC inlet contactor 742. The optional test equipment controller 770 can also be configured to control operation of the AC inlet contactor 716, the DC inlet contactor 742, and/or the one or more electric loads 722. In some embodiments, the optional test equipment controller 770 can also be configured to communicate with the one or more sensors configured to detect movement of the transport unit and/or the one or more sensors configured to monitor voltage and/or current levels received from the EVSE 732 via the power cord 734, battery 720, or electric loads 722. In some embodiments, the optional test equipment controller 770 is configured to communicate with the controller 718, the AC inlet contactor 716, the DC inlet contactor 742, and/or the one or more electric loads 722 via a network protocol (e.g., a control area bus (CAN) network bus, a RS485 connection, a Bluetooth connection, a Zigbee connection, etc.). While the optional test equipment controller 770 is shown separately from the controller 718, in some embodiments the optional test equipment controller 770 can be part of, combined with or included within the controller 718.

Operation of the controller 718 based on the method 600 is discussed below with respect to Fig. 8.

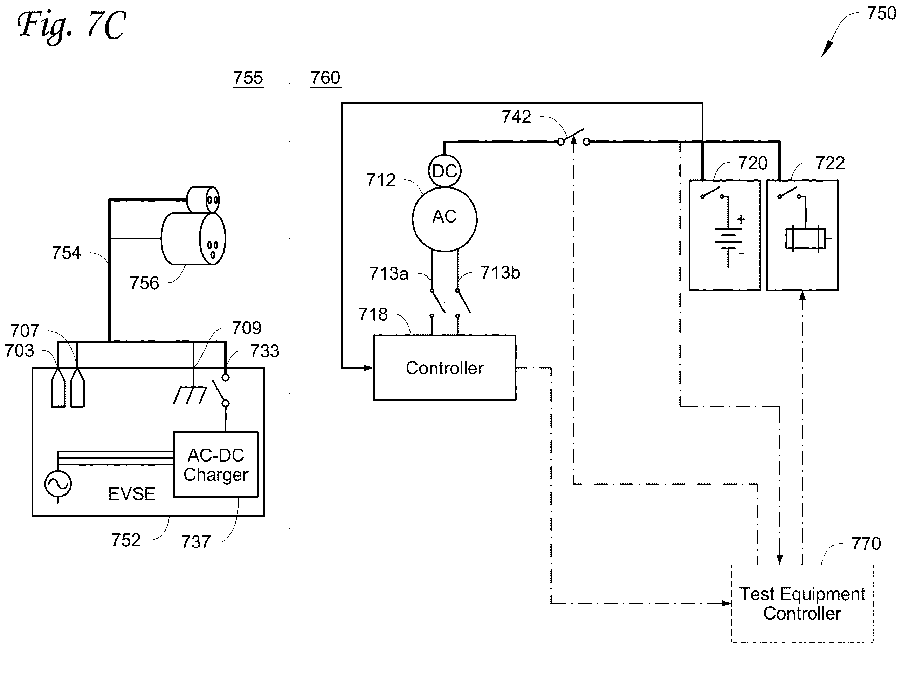

Fig. 7C illustrates an arc-flash prevention architecture 750 for use when an electrically powered accessory 760 is receiving electrical power from an electrical power source 755, according to a third embodiment.

The electrical power source 755 includes an EVSE 752 and a power cord 754 with a charging plug 756. In this embodiment, the EVSE 752 is a DC charging EVSE configured to supply DC power to the electrically powered accessory 760. The EVSE 752 includes a proximity pilot terminal 703, a contact pilot terminal 707, a protective earth terminal 709, a DC power connection 733, and an AC-DC charger 737. The pilot terminal 703 and contact terminal 707 are configured to send and receive signals through the power cord 754 to the electrically powered accessory 760. The DC power connection 733 minimally includes a positive and a negative terminal, and is configured to supply DC power to the electrically powered accessory 760. The AC-DC charger 737 is configured to convert AC power into DC power to be sent to the electrically powered accessory 760 via the DC power connection 733.

The power cord 754 and the charging plug 756 are configured to transfer DC power received from the DC power connection 733 to the electrically powered accessory 760. Also, the power cord 754 and the charging plug 756 are configured to transfer communication signals received from the proximity pilot terminal 703 and the control pilot terminal 707 to the electrically powered accessory 760. The power cord 754 and the charging plug 756 can be, for example, one of the power cords 300, 350 and the charging plugs 310, 360 shown in Figs. 4A and 4B.

The electrically powered accessory 760 includes a charging inlet receptacle 712 configured to receive and connect to the charging plug 756. The charging inlet receptacle 712 is connected to a battery pack 720 and one or more electric loads 722 of the electrically powered accessory 760 via a DC inlet contactor 742. The charging inlet receptacle 712 is also connected to a controller 718. This allows the charging inlet receptacle 712 to transfer DC power received from the charging plug 756 to the battery pack 720 and/or one or more electric loads 722. This also allows the charging inlet receptacle 712 to transfer communication signals between the electrical power source 755 (via the charging plug 756) and the controller 718 via a proximity pilot communication contact 713a and a control pilot communication contact 713b. The charging inlet receptacle 712 can be, for example, the receptacle 400 shown in Fig. 5.

The controller 718 is configured to control charging and powering of the electrically powered accessory 740. In some embodiments, the controller 718 is configured to communicate with one or more sensors configured to detect movement of the transport unit and/or one or more sensors configured to monitor voltage and/or current levels received from the EVSE 732 via the power cord 734. In some embodiments, the controller 718 can open and close the proximity pilot contact 713a and/or the control pilot contact 713b. In some embodiments, the controller 718 can also open and close the DC inlet contactor 742, for example, if the controller 718 determines that the electrically powered accessory 760 is malfunctioning.

The optional test equipment controller 770 is configured to test and ensure that the electrically powered accessory is operating correctly. The optional test equipment controller 770 can receive information from the controller 718, and the DC inlet contactor 742. The optional test equipment controller 770 can also be configured to control operation of the DC inlet contactor 742, and/or the one or more electric loads 722. In some embodiments, the optional test equipment controller 770 can also be configured to communicate with the one or more sensors configured to detect movement of the transport unit and/or the one or more sensors configured to monitor voltage and/or current levels received from the EVSE 752 via the power cord 754, battery 720, or electric loads 722. In some embodiments, the optional test equipment controller 770 is configured to communicate with the controller 718, the DC inlet contactor 742, and/or the one or more electric loads 722 via a network protocol (e.g., a control area bus (CAN) network bus, a RS485 connection, a Bluetooth connection, a Zigbee connection, etc.). While the optional test equipment controller 770 is shown separately from the controller 718, in some embodiments the optional test equipment controller 770 can be part of, combined with or included within the controller 718.

Operation of the controller 718 based on the method 600 is discussed below with respect to Fig. 8.

Fig. 8 illustrates a flowchart of a method 800 for arc-flash prevention at an EVSE, according to one embodiment. The method 800 is one example for use with the architectures 700, 730 and 750 shown in Figs. 7A-7C and is based on the method 600 shown in Fig. 6.

The method 800 begins at 805 whereby the controller 718 obtains input data. In some embodiments, the controller 718 can receive the input data from the one or more sensors at a predefined frequency (e.g., 10 Hz). The input data includes movement data regarding movement of a transport unit where the electrically powered accessory 710, 740, 760 is disposed, and electrical power data regarding whether the electrically powered accessory 710, 740, 760 is receiving electrical power from the electrical power source 705, 735, 755.

In some embodiments, the electrically powered accessory 710, 740, 760 and/or the transport unit can include one or more sensors that detect movement of the transport unit. In some embodiments, the one or more sensors can include a gyroscope and/or accelerometer to detect movement data of the transport unit. The one or more sensors can communicate with the controller 718. In some embodiments, the one or more sensors can communicate with the controller 718 via a network protocol (e.g., a control area bus (CAN) network bus, a RS485 connection, a Bluetooth connection, a Zigbee connection, etc.) and/or a discrete logic output when the one or more sensors have pre-programmed trigger thresholds.

In some embodiments, the electrically powered accessory 710, 740, 760 and/or the transport unit can include one or more sensors that detect whether the electrically powered accessory 710, 740, 760 is receiving electrical power from the electrical power source 705, 735, 755. For example, in some embodiments, the electrically powered accessory 710, 740, 760 can include voltage and/or current sensors configured to monitor voltage and/or current levels received by the electrically powered accessory 710, 740, 760 from the electrical power source 705, 735, 755. In some embodiments, the controller can receive electrical power data from the voltage and/or current sensors as digital or analog output pulses from the voltage and/or current sensors.

The method 800 then proceeds to 810 and optionally to 840.

At 810, the controller 718 uses the movement data to determine whether the transport unit is moving. In some embodiments, the controller 718 can compare the movement data to a predefined length threshold (e.g., 12 inches in a forward or rearward direction) to determine whether the transport unit is moving. When the controller 718 determines that the transport unit is moving (e.g., the movement data indicates that the transport unit has traveled farther than the predefined length threshold), the method 800 proceeds to 815. When the controller 718 determines that the transport unit is not moving (e.g., the movement data indicates that the transport unit has not traveled farther than the predefined length threshold), the method 800 proceeds back to 805.

At 815, the controller 718 determines whether the charging inlet receptacle 712 is receiving AC power and/or DC power from the electrical power source 705, 735, 755. Accordingly, the controller 718 can determine whether the electrically powered accessory 710, 740, 760 is connected to the electrical power source 705, 735, 755. When the controller 718 determines that the charging inlet receptacle 712 is receiving AC power, the method 800 proceeds to 820. When the controller 718 determines that the charging inlet receptacle 712 is receiving DC power, the method 800 proceeds to 825.

At 820, the controller 718 uses the electrical power data to determine whether the electrically powered accessory 710, 740, 760 is receiving AC electrical power from the electrical power source 705, 735, 755 that is less than a predefined electrical threshold. In some embodiments, the predefined electrical threshold can be, for example, an AC voltage level (e.g., 50 VAC). When the controller 718 determines that the electrically powered accessory 710, 740, 760 is receiving AC electrical power from the electrical power source 705, 735, 755 (e.g., the electrical power data indicates that the AC voltage and/or current is greater than the predefined electrical threshold), the method 800 proceeds to 830. When the controller 718 determines that the electrically powered accessory 710, 740, 760 is not receiving AC electrical power from the electrical power source 705, 735, 755 (e.g., the electrical power data indicates that the AC voltage and/or current is not greater than the predefined electrical threshold), the method 800 proceeds to 835.

At 825, the controller 718 uses the electrical power data to determine whether the electrically powered accessory 710, 740, 760 is receiving DC electrical power from the electrical power source 705, 735, 755 that is less than a predefined electrical threshold. In some embodiments, the predefined electrical threshold can be, for example, a DC voltage level (e.g., 50 VDC). When the controller 718 determines that the electrically powered accessory 710, 740, 760 is receiving DC electrical power from the electrical power source 705, 735, 755 (e.g., the electrical power data indicates that the DC voltage and/or current is greater than the predefined electrical threshold), the method proceeds to 830. When the controller 718 determines that the electrically powered accessory 710, 740, 760 is not receiving DC electrical power from the electrical power source 705, 735, 755 (e.g., the electrical power data indicates that the DC voltage and/or current is not greater than the predefined electrical threshold), the method 800 proceeds to 835.

At 830, the controller 718 sends an instruction to deenergize one or more terminals connecting the electrically powered accessory 710, 740, 760 to the electrical power source 705, 735, 755. In some embodiments, the controller 718 can use a signal-level relay to open proximity pilot communication contact 713a and thereby deenergize the EVSE 702, 732, 752. Accordingly, the method 800 can prevent an arc-flash event that can create a safety hazard where the electrically powered accessory 710, 740, 760 was connected to the electrical power source 705, 735, 755. The method 800 then proceeds to 835.

At 835, the controller 718 waits for the electrically powered accessory 710, 740, 760 to be reconnected to the electrical power source 705, 735, 755. In some embodiments, this can include waiting for the electrically powered accessory 710, 740, 760 to be re-plugged to the electrical power source 705, 735, 755 to reinitiate electrical power transfer from the electrical power source 705, 735, 755 to the electrically powered accessory 710, 740, 760. The method 800 then proceeds back to 805.

At optional 840, the optional test equipment controller 770 monitors a periodic heartbeat signal from the controller 718. The heartbeat signal can include data indicating that the controller 718 is operating properly. In some embodiments, the heartbeat signal can be a square wave signal. In some embodiments, the heartbeat signal can include, for example, a clock signal from the controller 718. In some embodiments, the optional test equipment controller 770 can detect the heartbeat signal periodically (e.g., once every 100 ms). If the optional test equipment controller 770 determines that the heartbeat signal has been received from the controller 718 or if the heartbeat signal has not been received within the allowed time period (e.g. 100ms), the method 800 proceeds to optional 845.

At optional 845, the optional test equipment controller 770 determines whether the controller 718 is capable of determining that the transport unit is moving and/or that the electrically powered accessory 710, 740, 760 is connected to the electrical power source 705, 735, 755. In some embodiments, the test equipment controller 770 can determine that the controller 718 is capable of determining that the transport unit is moving and/or that the electrically powered accessory 710, 740, 760 is connected to the electrical power source 705, 735, 755 by monitoring a frequency and validity of data provided in the heartbeat signal. When the optional test equipment controller 770 determines that the controller 718 is capable of determining that the transport unit is moving and/or that the electrically powered accessory 710, 740, 760 is connected to the electrical power source 705, 735, 755, the method 800 proceeds to optional 850. When the optional test equipment controller 770 determines that the controller 718 is not capable of determining that the transport unit is moving and/or that the electrically powered accessory 710, 740, 760 is not connected to the electrical power source 705, 735, 755, the method 800 proceeds to optional 860.

At optional 850, the optional test equipment controller 770 determines whether any of the one or more sensors providing input data is functional. In some embodiments, the optional test equipment controller 770 can determine whether any of the one or more sensors providing input data is functional by using various validity checks available by each of the one or more sensors. In some embodiments, the optional test equipment controller 770 may be provided with the same data from the one or more sensors that is sent to the controller 718. When the optional test equipment controller 770 determines that all of the one or more sensors providing input data are functional, the method 800 proceeds to optional 855. When the optional test equipment controller 770 determines that any of the one or more sensors providing data is not functional, the method 800 proceeds to optional 860.

At optional 855, the optional test equipment controller 770 determines whether the controller 718 is capable of deenergizing one or more terminals connecting the electrically powered accessory 710, 740, 760 to the electrical power source 705, 735, 755. In some embodiments, this can include determining whether the controller 718 can use a signal-level relay to open the proximity pilot communication contact 713a and thereby deenergize the EVSE 702, 732, 752. In some embodiments, determining whether the controller 718 is capable of deenergizing one or more terminals connecting the electrically powered accessory 710, 740, 760 to the electrical power source 705, 735, 755 by a self-test regime initiated when the electrically powered accessory 710, 740, 760 is connected to the electrical power source 705, 735, 755 but prior to commencement of any charging (e.g., to demonstrate that the proximity pilot contact 713a and/or the control pilot contact 713b can be disconnected). The result can be stored in a memory portion accessible by the controller 718 and the test equipment controller 770. When the test equipment controller 770 determines that the controller 718 is capable of deenergizing one or more terminals connecting the electrically powered accessory 710, 740, 760 to the electrical power source 705, 735, 755, the method 800 proceeds to optional 875. When the test equipment controller 770 determines that the controller 718 is not capable of deenergizing one or more terminals connecting the electrically powered accessory 710, 740, 760 to the electrical power source 705, 735, 755, the method 800 proceeds to optional 860.

At optional 860, the optional test equipment controller 770 can instruct a system shutdown of the electrically powered accessory 710, 740, 760 to reduce electrical loading of the electrically powered accessory 710, 740, 760. In some embodiments, the test equipment controller 770 can instruct the electrical power source 705, 735, 755 (e.g., via a CAN message, a discrete signal, a discrete protocol) to reduce an output current to ~ 0 Amps. The method 800 then proceeds to optional 865.

At optional 865, the optional test equipment controller 770 has determined that the controller 718 is not operating correctly and can directly disconnect all AC and DC loads (e.g., the battery pack 720 and the one or more electric loads 722) by opening AC inlet contactor 716 and DC inlet contactor 742, and can directly disconnect the electrical power source 705, 735, 755 from the charging inlet receptacle 712. The method 800 then proceeds to optional 870.

At optional 870, the optional test equipment controller 770 can provide a fault alarm notification to an operator. In some embodiments, the fault alarm notification can be an audible fault alarm notification. In some embodiments, the fault alarm notification can be a visible fault alarm notification. In some embodiments, the fault alarm notification can be an audible and visible fault alarm notification. For example, the fault alarm notification can be provided using industrial status lights, control interface screens, and/or buzzer alarms on the outside of the electrically powered accessory 710, 740, 760 or the transport unit, and/or a human machine interface inside a cab of a tractor pulling the transport unit. Also, for example, the fault alarm notification can be sent over a cellular/wireless protocol to a remote monitoring system (e.g., a dispatch center). The method 800 then proceeds back to optional 845.

At optional 875, the optional test equipment controller 770 can release lockout of AC and DC inlets. That is, the controller 718 can close or ensure closure of the AC or DC inlet contactors 716, 742 such that the electrically powered accessory 710, 740, 760 may operate normally again. The method 800 then proceeds back to 845.

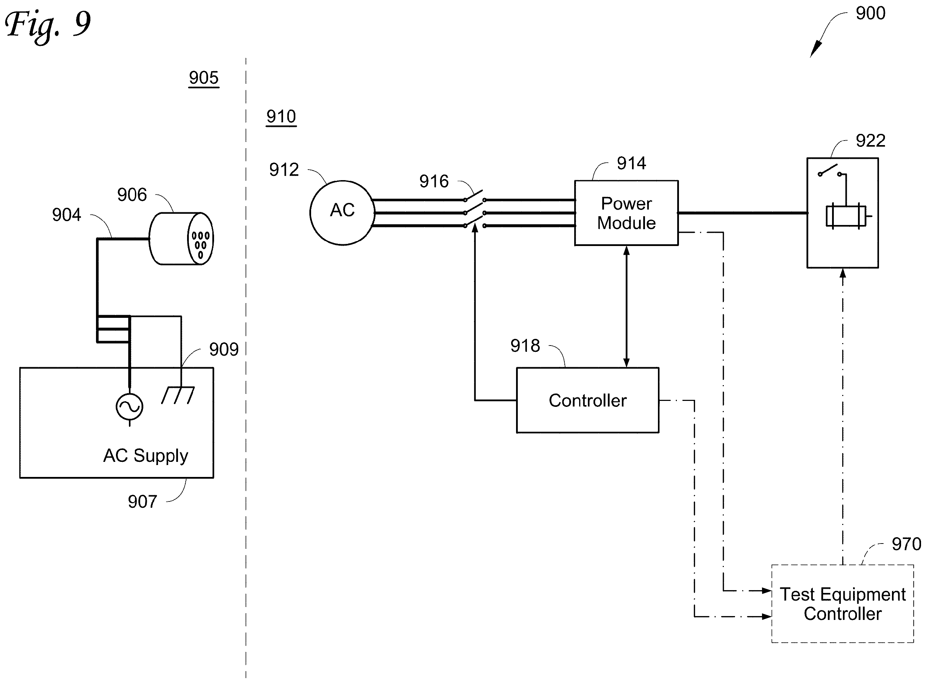

Fig. 9 illustrates an arc-flash prevention architecture 900 for use when an electrically powered accessory 910 is receiving electrical power from a shore power electric standby location 905, according to one embodiment. Unlike the electrical power sources 705, 735, 755 shown in Figs. 7A-7C, the shore power electric standby location 905 is not configured to communicate with the electrically powered accessory 910.

The shore power electric standby location 905 includes an AC supply 907 and a power cord 904 with a shore power plug 906. In this embodiment, the AC supply 907 is configured to supply AC power (e.g., three phase AC power) to the electrically powered accessory 910. The AC supply 907 includes an AC phase line terminal 908 and a protective earth terminal 909. The AC phase line terminal 908 with the protective earth terminal 909 are configured to supply three phase AC power to the electrically powered accessory 910 via the power cord 904.

The power cord 904 and the shore power plug 906 are configured to transfer AC power (e.g., three phase AC power) received from the AC phase line terminal 908 to the electrically powered accessory 910. The power cord 904 and the shore power plug 906 can be a conventional cord, plug and receptacle used for connecting to shore power (e.g., and IEC pin and sleeve, a NEMA twist lock, etc.). In some embodiments, the power cord 904 and the shore power plug 906 can be, for example, one of the power cords 300, 350 and the charging plugs 310, 360 shown in Figs. 4A and 4B.

The electrically powered accessory 910 includes a shore power inlet receptacle 912 configured to receive and connect to the shore power plug 906. The shore power inlet receptacle 912 is connected to a power module 914 via an AC power contactor 916. The power module 914 is connected to one or more electric loads 922 of the electrically powered accessory 910.

The power module 914 can include an AC to DC converter that is configured to convert AC power received via the shore power inlet receptacle 912 into DC power that can be used to power one or more electric loads 922 of the electrically powered accessory 910.

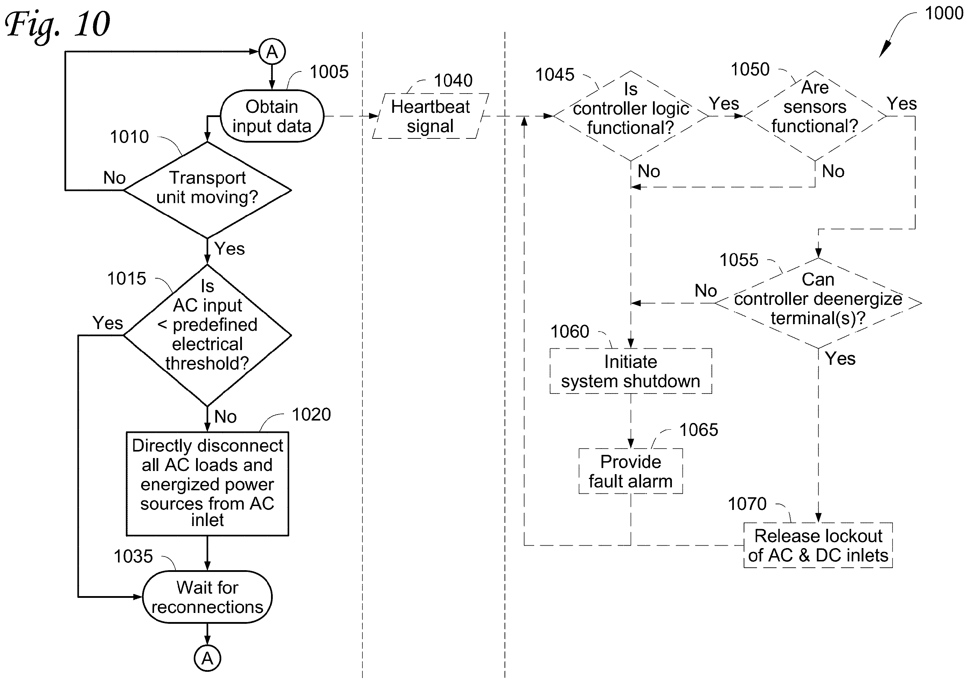

The electrically powered accessory 910 also includes a controller 918 that is configured to control the AC power contactor 916 and thereby control whether power received by the shore power inlet receptacle 912 is provided to the power module 914. In some embodiments, the controller 918 is also configured to communicate with one or more sensors configured to detect movement of the transport unit and/or one or more sensors configured to monitor voltage and/or current levels received from the shore power electric standby location 905 via the power cord 904. Operation of the controller 918 based on the method 600 is discussed below with respect to Fig. 10.

Fig. 10 illustrates a flowchart of a method 1000 for arc-flash prevention at a shore power electric standby location, according to one embodiment. The method 1000 is one example for use with the architecture 900 shown in Fig. 9 and is based on the method 600 shown in Fig. 6.

The method 1000 begins at 1005 whereby the controller 918 obtains input data. In some embodiments, the controller 918 can receive the input data from the one or more sensors at a predefined frequency (e.g., 10 Hz). The input data includes movement data regarding movement of a transport unit where the electrically powered accessory 910 is disposed, and electrical power data regarding whether the electrically powered accessory 910 is receiving electrical power from the shore power electric standby location 905.

In some embodiments, the electrically powered accessory 910 and/or the transport unit can include one or more sensors that detect movement of the transport unit. In some embodiments, the one or more sensors can include a gyroscope and/or accelerometer to detect movement data of the transport unit. The one or more sensors can communicate with the controller 918. In some embodiments, the one or more sensors can communicate with the controller 918 via a network protocol (e.g., a control area bus (CAN) network bus, a RS485 connection, a Bluetooth connection, a Zigbee connection, etc.) and/or a discrete logic output when the one or more sensors have pre-programmed trigger thresholds.

In some embodiments, the electrically powered accessory 910 and/or the transport unit can include one or more sensors that detect whether the electrically powered accessory 910 is receiving electrical power from the shore power electric standby location 905. For example, in some embodiments, the electrically powered accessory 910 can include voltage and/or current sensors configured to monitor voltage and/or current levels received by the electrically powered accessory 910 from the shore power electric standby location 905. In some embodiments, the controller can receive electrical power data from the voltage and/or current sensors as digital or analog output pulses from the voltage and/or current sensors.

The method 1000 then proceeds to 1010 and optionally to 1040.

At 1010, the controller 918 uses the movement data to determine whether the transport unit is moving. In some embodiments, the controller 918 can compare the movement data to a predefined length threshold (e.g., 12 inches in a forward or rearward direction) to determine whether the transport unit is moving. When the controller 918 determines that the transport unit is moving (e.g., the movement data indicates that the transport unit has traveled farther than the predefined length threshold), the method 1000 proceeds to 1015. When the controller 918 determines that the transport unit is not moving (e.g., the movement data indicates that the transport unit has not traveled farther than the predefined length threshold), the method 1000 proceeds back to 1005.

At 1015, the controller 918 uses the electrical power data to determine whether the electrically powered accessory 910 is receiving AC electrical power from the shore power electric standby location 905. In some embodiments, the controller 918 can compare the electrical power data to a predefined electrical threshold to determine whether the electrically powered accessory 910 is receiving AC electrical power from the shore power electric standby location 905. In some embodiments, the predefined electrical threshold can be, for example, an AC voltage level (e.g., 50 VAC). When the controller 918 determines that the electrically powered accessory 910 is receiving AC electrical power from the shore power electric standby location 905 (e.g., the electrical power data indicates that the AC voltage and/or current is greater than the predefined electrical threshold), the method 1000 proceeds to 1020.

At 1020, the controller 918 sends an instruction to deenergize one or more terminals connecting the electrically powered accessory 910 to the shore power electric standby location 905. In some embodiments, the controller 918 can send an instruction to open AC power contactor 916 to disconnect the power module 914 and the electric loads 922 from the shore power inlet receptacle 916. Accordingly, the method 1000 can prevent an arc-flash event that can create a safety hazard where the electrically powered accessory 910 was connected to the shore power electric standby location 905. The method 1000 then proceeds to 1035.

At 1035, the controller 918 waits for the electrically powered accessory 910 to be reconnected to the shore power electric standby location 905. In some embodiments, this can include waiting for the electrically powered accessory 910 to be re-plugged to the shore power electric standby location 905 to reinitiate electrical power transfer from the shore power electric standby location 905 to the electrically powered accessory 910. The method 1000 then proceeds back to 1005.

At optional 1040, the optional test equipment controller 970 monitors a periodic heartbeat signal from the controller 918. The heartbeat signal can include data indicating that the controller 918 is operating properly. In some embodiments, the heartbeat signal can be a square wave signal. In some embodiments, the heartbeat signal can include, for example, a clock signal from the controller 918. In some embodiments, the optional test equipment controller 970 can detect the heartbeat signal periodically (e.g., once every 100 ms). If the optional test equipment controller 970 determines that the heartbeat signal has been received from the controller 918 or if the heartbeat signal has not been received within the allowed period (e.g. 100ms), the method1000 proceeds to optional 1045.

At optional 1045, the optional test equipment controller 970 determines whether the controller 918 is capable of determining that the transport unit is moving and/or that the electrically powered accessory 910 is connected to the shore power electric standby location 905. In some embodiments, the test equipment controller 970 can determine that the controller 918 is capable of determining that the transport unit is moving and/or that the electrically powered accessory 910 is connected to the shore power electric standby location 905 by monitoring a frequency and validity of data provided in the heartbeat signal. When the optional test equipment controller 970 determines that the controller 918 is capable of determining that the transport unit is moving and/or that the electrically powered accessory 910 is connected to the shore power electric standby location 905, the method 1000 proceeds to optional 1050. When the optional test equipment controller 970 determines that the controller 918 is not capable of determining that the transport unit is moving and/or that the electrically powered accessory 910 is not connected to the shore power electric standby location 905, the method 1000 proceeds to optional 1060.

At optional 1050, the test equipment controller 970 determines whether any of the one or more sensors providing input data is functional. In some embodiments, the optional test equipment controller 970 can determine whether any of the one or more sensors providing input data is functional by using various validity checks available by each of the one or more sensors. In some embodiments, the optional test equipment controller 970 may be provided with the same data from the one or more sensors that is sent to the controller 918. When the test equipment controller 970 determines that all of the one or more sensors providing input data are functional, the method 1000 proceeds to optional 1055. When the test equipment controller 970 determines that any of the one or more sensors providing data is not functional, the method 1000 proceeds to optional 1060.

At optional 1055, the test equipment controller 970 determines whether the controller 918 is capable of disconnecting the one or more electric loads 922 from the shore power electric standby location 905. In some embodiments, this can include determining whether the controller 918 can open the AC power contactor 916. The result can be stored in a memory portion accessible by the controller 718 and the optional test equipment controller 970. When the optional test equipment controller 970 determines that the controller 918 is capable of disconnecting the one or more electric loads 922 from the shore power electric standby location 905, the method 1000 proceeds to optional 1070. When the optional test equipment controller 970 determines that the controller 918 is not capable of disconnecting the one or more electric loads 922 from the shore power electric standby location 905, the method 1000 proceeds to optional 1060.

At optional 1070, the test equipment controller 970 can instruct the controller 918 to release lockout of AC and DC inlets. That is, the controller 918 can close or ensure closure of the AC inlet contactor 916 such that the electrically powered accessory 910 may operate normally. The method 1000 then proceeds back to optional 1045.

At optional 1060, the test equipment controller 970 can instruct a system shutdown of the electrically powered accessory 910 to reduce electrical loading of the electrically powered accessory 910. The method 1000 then proceeds to optional 1065.

At optional 1065, the test equipment controller 770 can provide a fault alarm notification to an operator. In some embodiments, the fault alarm notification can be an audible fault alarm notification. In some embodiments, the fault alarm notification can be a visible fault alarm notification. In some embodiments, the fault alarm notification can be an audible and visible fault alarm notification. For example, the fault alarm notification can be provided using industrial status lights, control interface screens, and/or buzzer alarms on the outside of the electrically powered accessory 910 or the transport unit, and/or a human machine interface inside a cab of a tractor pulling the transport unit. Also, for example, the fault alarm notification can be sent over a cellular/wireless protocol to a remote monitoring system (e.g., a dispatch center). The method 1000 then proceeds to optional 1045.

### Aspects:

Any of aspects 1 - 7 can be combined with any of aspects 8 - 15.
Aspect 1. A method for preventing an arc-flash event while an electrically powered accessory disposed on a transport unit is connected to an electrical power source, the method comprising:
   obtaining movement data indicating whether the transport unit is moving;
   obtaining electrical power data indicating whether the electrically powered accessory is receiving electrical power from the electrical power source;
   determining that the transport unit is moving;
   determining that the electrically powered accessory is connected to the electrical power source; and
   deenergizing a connection that supplies power from the electrical power source to one or more loads of the electrically powered accessory upon detecting both that the transport unit is moving and that the electrically powered accessory is connected to the electrical power source.
Aspect 2. The method of aspect 1, wherein deenergizing the connection includes opening a proximity pilot connection to deenergize the electrical power source.
Aspect 3. The method of any one of aspects 1 and 2, wherein deenergizing the connection includes opening an AC power contactor connecting supplying power from a power module to the one or more loads of the electrically powered accessory.
Aspect 4. The method of any one of aspects 1-3, wherein the electrical power source includes an electric vehicle supply equipment.
Aspect 5. The method of any one of aspects 1-4, wherein the electrical power source is a shore power electric standby location.
Aspect 6. The method of any one of aspects 1-5, wherein determining that the transport unit is moving includes determining that the transport unit has moved beyond a predefined length threshold.
Aspect 7. The method of any one of aspects 1-6, wherein determining that the electrically powered accessory is connected to the electrical power source includes determining whether the electrically powered accessory is receiving electrical power that is greater than a predefined electrical threshold.
Aspect 8. A system for preventing an arc-flash event while an electrically powered accessory disposed on a transport unit is connected to an electrical power source, the system comprising:
   the electrically powered accessory; and
   a controller configured to:
      obtain movement data indicating whether the transport unit is moving,
      obtain electrical power data indicating whether the electrically powered accessory
   is receiving electrical power from the electrical power source,
      determine that the transport unit is moving,
      determine that the electrically powered accessory is connected to the electrical power source, and
      deenergize a connection that supplies power from the electrical power source to one or more loads of the electrically powered accessory upon detecting both that the transport unit is moving and that the electrically powered accessory is connected to the electrical power source.
Aspect 9. The system of aspect 8, wherein the controller is configured to deenergize the connection by opening a proximity pilot connection to deenergize the electrical power source.
Aspect 10. The system of any one of aspects 8-9, wherein the controller is configured to deenergize the connection includes opening an AC power contactor supplying power from a power module to the one or more loads of the electrically powered accessory.
Aspect 11. The system of any one of aspects 8-10, wherein the controller is configured to deenergize the connection includes opening a DC power contactor supplying power from a power module to the one or more loads of the electrically powered accessory.
Aspect 12. The system of any one of aspects 8-11, wherein the electrical power source includes an electric vehicle supply equipment.
Aspect 13. The system of any one of aspects 8-12, wherein the electrical power source is a shore power electric standby location.
Aspect 14. The system of any one of aspects 8-13, wherein the controller is configured to determine that the transport unit is moving by determining that the transport unit has moved beyond a predefined length threshold.
Aspect 15. The system of any one of aspects 8-14, wherein the controller is configured to determine that the electrically powered accessory is connected to the electrical power source by determining whether the electrically powered accessory is receiving electrical power that is greater than a predefined electrical threshold.

The examples disclosed in this application are to be considered in all respects as illustrative and not limitative. The scope of the invention is indicated by the appended claims rather than by the foregoing description; and all changes which come within the meaning and range of equivalency of the claims are intended to be embraced therein.

## Claims

1. A method for preventing an arc-flash event while an electrically powered accessory disposed on a transport unit is connected to an electrical power source, the method comprising:
obtaining movement data indicating whether the transport unit is moving;
obtaining electrical power data indicating whether the electrically powered accessory is receiving electrical power from the electrical power source;
determining that the transport unit is moving;
determining that the electrically powered accessory is connected to the electrical power source; and
deenergizing a connection that supplies power from the electrical power source to one or more loads of the electrically powered accessory upon detecting both that the transport unit is moving and that the electrically powered accessory is connected to the electrical power source.

2. The method of claim 1, wherein deenergizing the connection includes opening a proximity pilot connection to deenergize the electrical power source.

3. The method of any one of claims 1 and 2, wherein deenergizing the connection includes opening an AC power contactor connecting supplying power from a power module to the one or more loads of the electrically powered accessory.

4. The method of any one of claims 1-3, wherein the electrical power source includes an electric vehicle supply equipment.

5. The method of any one of claims 1-4, wherein the electrical power source is a shore power electric standby location.

6. The method of any one of claims 1-5, wherein determining that the transport unit is moving includes determining that the transport unit has moved beyond a predefined length threshold.

7. The method of any one of claims 1-6, wherein determining that the electrically powered accessory is connected to the electrical power source includes determining whether the electrically powered accessory is receiving electrical power that is greater than a predefined electrical threshold.

8. A system for preventing an arc-flash event while an electrically powered accessory disposed on a transport unit is connected to an electrical power source, the system comprising:
the electrically powered accessory; and
a controller configured to:
obtain movement data indicating whether the transport unit is moving,
obtain electrical power data indicating whether the electrically powered accessory is receiving electrical power from the electrical power source,
determine that the transport unit is moving,
determine that the electrically powered accessory is connected to the electrical power source, and
deenergize a connection that supplies power from the electrical power source to one or more loads of the electrically powered accessory upon detecting both that the transport unit is moving and that the electrically powered accessory is connected to the electrical power source.

9. The system of claim 8, wherein the controller is configured to deenergize the connection by opening a proximity pilot connection to deenergize the electrical power source.

10. The system of any one of claims 8 and 9, wherein the controller is configured to deenergize the connection includes opening an AC power contactor supplying power from a power module to the one or more loads of the electrically powered accessory.

11. The system of any one of claims 8-10, wherein the controller is configured to deenergize the connection includes opening a DC power contactor supplying power from a power module to the one or more loads of the electrically powered accessory.

12. The system of claim 8, wherein the electrical power source includes an electric vehicle supply equipment.

13. The system of any one of claims 8-12, wherein the electrical power source is a shore power electric standby location.

14. The system of any one of claims 8-13, wherein the controller is configured to determine that the transport unit is moving by determining that the transport unit has moved beyond a predefined length threshold.

15. The system of any one of claims 8-14, wherein the controller is configured to determine that the electrically powered accessory is connected to the electrical power source by determining whether the electrically powered accessory is receiving electrical power that is greater than a predefined electrical threshold.
